# EUROPEAN PATENT APPLICATION

(11) **EP 1 717 977 A2**
(43) Date of publication of application: **02.11.2006**
(21) Application number: 06008835.8
(22) Date of filing: 27.04.2006
(51) Int. Cl.: H04H 1/00

(54) **Method and apparatus for supporting a priority data transmission in a transmitter of a digital audio broadcasting system**

(30) Priority: 27.04.2005 KR 20050035073
(71) Applicant: Samsung Electronics Co., Ltd., Suwon-si, Gyeonggi-Do (KR)
(72) Inventor: Lee, Hye-Young c/o Samsung Electronics Co.,Ltd., Yeongtong-gu Suwon-si Gyeonggi-do (KE); Jung, Ki-Ho c/o Samsung Electronics Co.,Ltd., Yeongtong-gu Suwon-si Gyeonggi-do (KE); Song, Jae-Yeon c/o Samsung Electronics Co.,Ltd., Yeongtong-gu Suwon-si Gyeonggi-do (KE); Lee, Jong-Hyo c/o Samsung Electronics Co.,Ltd., Yeongtong-gu Suwon-si Gyeonggi-do (KE); Ann, Jong-Hoon c/o Samsung Electronics Co.,Ltd., Yeongtong-gu Suwon-si Gyeonggi-do (KE)
(74) Representative: Grünecker, Kinkeldey, Stockmair & Schwanhäusser Anwaltssozietät

(57) **Abstract**

A method and apparatus for supporting a priority transmission of broadcasting data in a transmitter of a digital broadcasting system. A determination is made as to whether a priority transmission of one broadcasting service to be provided is supported. If the service supports the priority transmission, a plurality of subchannels to be transmitted for the service are set and a priority of the data to be mapped to the plurality of subchannels is set. The data of the broadcasting service is mapped to the plurality of subchannels according to the priority. Data streams mapped to the plurality of subchannels are encoded in different encoders and the encoded data streams are transmitted.

## Description

### BACKGROUND OF THE INVENTION

### 1. Field of the Invention

The present invention generally relates to a Digital Audio Broadcasting (DAB) system and a terrestrial Digital Multimedia Broadcasting (DMB) system, and more particularly to a method and apparatus for transmitting data one of a first service such that a code rate can be differentially applied according to data priority when audio, data, and video services are provided from a DAB transmitter.

### 2. Description of the Related Art

A Digital Audio Broadcasting (DAB) transmitter is a transmitter of a DAB system commonly referred to as a European Research Coordination Agency (Eureka) 147 DAB. The DAB system is a digital broadcasting system of audio and data services for providing a digital signal of the existing Amplitude Modulation (AM) and Frequency Modulation (FM) broadcasting in Europe.

The DAB system defines the audio and data services as possible transmission services. To meet an increasing need for a mobile multimedia service with the rapid development of mobile communication technologies and wireless data transmission technologies, a terrestrial Digital Multimedia Broadcasting (DMB) system has been proposed which can provide the multimedia service in a streaming mode of the DAB system.

The terrestrial DMB system is a typical example of mobile multimedia technologies in which Television (TV) programs can be viewed on mobile devices in a streaming mode of the DAB system. The terrestrial DMB system is not only capable of providing the audio and data services supported in the DAB system but is also capable of providing a stable video service. Thus, the terrestrial DMB system shares a transmitter and a receiver with the DAB system, and is additionally provided with a video encoder and decoder for providing the video service.

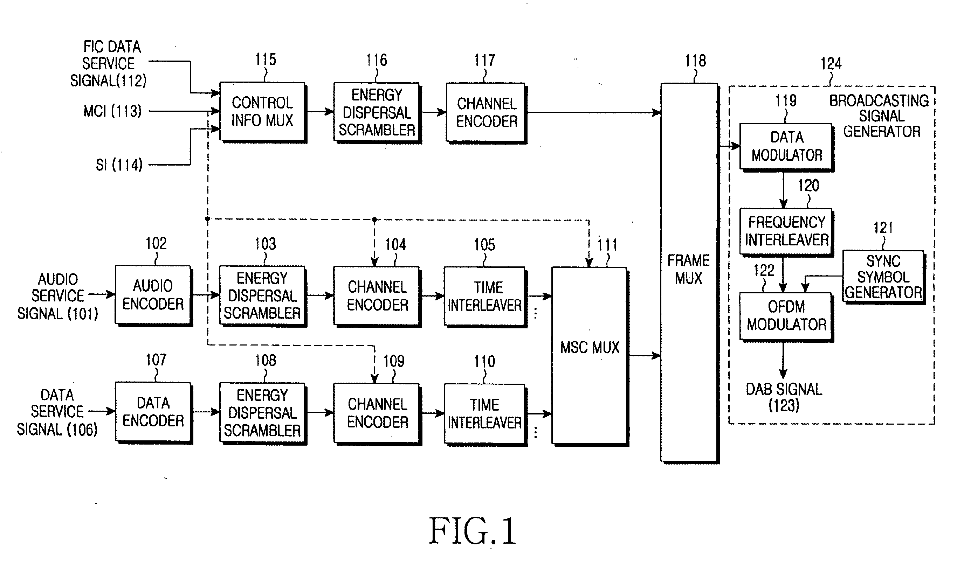

FIG. 1 illustrates a structure of the transmitter in the conventional DAB system.

Referring to FIG. 1, an audio service signal 101 and a data service signal 106 to be transmitted are multiplexed into one DAB signal. A process for multiplexing the audio service signal 101 and the data service signal 106 is as follows.

An audio encoder 102 encodes the audio service signal 101. Before transferring the input signal 101, the audio encoder 102 removes unnecessary information, compresses the data, and reduces an amount of data to be transmitted, thereby enabling more efficient data transmission. The audio encoder 102 conforms to the format of Moving Picture Experts Group (MPEG)-1 Audio Layer-2 or MPEG-2 Audio Layer-2.

The data compressed in the audio encoder 102 is input to an energy dispersal scrambler 103. The energy dispersal scrambler 103 multiplies the input data by a Pseudo-Random Binary Sequence (PRBS). The input data has a particular pattern in which identical bits are repeated. The repetition of the particular pattern causes an undesired signal corresponding to a direct current component to be generated when data to be transmitted is converted in a high frequency band. To prevent the undesired signal from being generated, the data passes through the energy dispersal scrambler 103 for multiplying the input data by the PRBS. When the data in which the particular pattern is repeated is input to the energy dispersal scrambler 103, an output value is changed to a random pattern.

After passing through the energy dispersal scrambler 103, the data is input to a channel encoder 104. In the DAB system, the channel encoder 104 performs a convolutional encoding process and a puncturing process. For a voice service, a convolutional code has a coding rate of ¼. After the convolutional encoding process, the data undergoes the puncturing process. The total number of possible puncturing vectors used in the puncturing process is 24 in the DAB system. The coding rate differs according to a vector used among the 24 vectors.

The encoding method operates in two encoding modes of an Unequal Error Protection (UEP) encoding mode and an Equal Error Protection (EEP) encoding mode. The UEP encoding method divides an output part of an encoder into four parts, applies a different puncturing vector in every part, and operates at different coding rates on a part-by-part basis. On the other hand, the EEP encoding method applies an identical puncturing vector to output data and operates at a regular coding rate. Because the coding rate differs according to a selected puncturing vector, the DAB system has several selectable coding rates according to a puncturing vector pattern. The selectable coding rates differ according to use of either the UEP encoding method or the EEP encoding method, or differ according to capacity of a subchannel to be transmitted.

The transmitter determines which of the selectable coding rates is to be applied according to type or characteristics of data to be currently transmitted. The transmitter selects one of the selectable coding rates according to whether data to be currently transmitted is sensitive to error or delay. When data to be currently transmitted is sensitive to error, the transmitter selects a coding rate capable of increasing the error correction capability. When data to be currently transmitted is sensitive to delay, the transmitter selects a coding rate capable of increasing a data transmission rate. The transmitter sends information about the selected coding rate to a receiver. The coding rate information is contained in Multiplex Configuration Information (MCI) 113.

Output data of the channel encoder 104 is transferred to a time interleaver 105. The time interleaver 105 performs an operation for changing an output sequence of input signals according to a regular rule. The DAB system exploits a convolutional interleaver.

The convolutional interleaver has 16 registers of predefined different lengths. A sequential array of the 16 registers with the different lengths is also defined in advance. Data input to the convolutional interleaver is sequentially input to the registers. The registers simultaneously output the last bits stored as output values. Thus, the input data is delayed by the length of the register and then is sent as the output value of the register. That is, the output data may or may not be delayed according its position.

A delay time of the output data value differs according to the length of each register. Because the output data has a different delay value according to the length of the each register, the output order of output data of the interleaver becomes different from the input order. When output data of the interleaver is permutated, a burst error may occur while data is transmitted from the transmitter to the receiver. In this case, if the data passes through a deinterleaver of the receiver, a random error may occur because positions of error-generated bits are scattered. This random error can be corrected in a decoder.

The output data of the time interleaver 105 is input to a Main Service Channel (MSC) multiplexer 111. Because one or more services may be simultaneously present in the case of the audio service, the data is input to the MSC multiplexer 111 after independently undergoing the processes on a service-by-service basis.

The data service signal 106 passes through a data encoder 107. The data encoder 107 may be omitted or may differ according to the type of a data service.

The data service signal is input to an energy dispersal scrambler 108. A function of the energy dispersal scrambler 108 is identical with that of the energy dispersal scrambler 103 used for the audio service signal. The PRBS used in the energy dispersal scrambler 108 is identical with that used in the energy dispersal scrambler 103.

Output data of the energy dispersal scrambler 108 is input to a channel encoder 109. Like the channel encoder 104 used for the audio service signal, the channel encoder 109 performs the convolutional encoding process and the puncturing process and can selectively apply one of the UEP and EEP encoding modes. Conventionally, the audio service signal uses the UEP encoding method and the data service signal uses the EEP encoding method. The channel encoder 109 selects and uses one of a selectable coding rates according to the characteristics of the data service to be transmitted from the transmitter, as in the audio service. Information about the selected coding rate is included in the MCI 113, and is transmitted to the receiver.

Upon passing through the channel encoder 109, the data is transferred to a time interleaver 110. The time interleaver 110 uses the same convolutional interleaver as the time interleaver 105 used for the audio service signal.

Output data of the time interleaver 110 is input to the MSC multiplexer 111. One or more data services may be simultaneously present in the case of the data service, like the audio service. After independently undergoing the processes on a service-by-service basis, the data is input to the MSC multiplexer 111.

As described above, the audio and data service signals are input to the MSC multiplexer 111 after independently undergoing the encoding and interleaving processes. If the service signal processes are independently performed, it means that the services can have different coding rates.

A unit for an independent encoding process in each service is referred to as a subchannel in a physical concept. That is, the encoder and the time interleaver operate in a unit of one subchannel. In the channel encoding process as described above, each subchannel selectively uses one of selectable coding rates according to characteristics of service data to be transmitted. Thus, a service using a different subchannel can have a different coding rate.

A service transmission method for use in the DAB system has two modes. The transmission method in a streaming mode can transmit only one service in one channel, and the transmission method in packet mode can transmit one or more services in one subchannel. The streaming mode transmission method is used for an audio service transmission, and the packet mode transmission method is used for a conventional data service transmission. Also, a data service can be transmitted in the streaming mode. Data associated with an audio program can be transmitted in the same subchannel as that of the audio service signal. Priority data such as traffic information or emergency information is separated as a Fast Information Channel (FIC) data service signal 112, and can be transmitted in an FIC.

A main function of the FIC is to transmit control information. The FIC is constructed by the FIC data service signal 112, the MCI 113 corresponding to control information about a multiplex of subchannels, and Service Information (SI) 114 containing control information about services allocated to subchannels.

After undergoing the subchannel-by-subchannel encoding and interleaving processes, signals are input to the MSC multiplexer 111. The MSC multiplexer 111 multiplexes input subchannels. The multiplexed subchannel data constructs one MSC. The MSC is input to a frame multiplexer 118. In addition to the MSC, the FIC is input to the frame multiplexer 118. The MSC, the FIC, and the synchronization channel is used to construct one DAB frame.

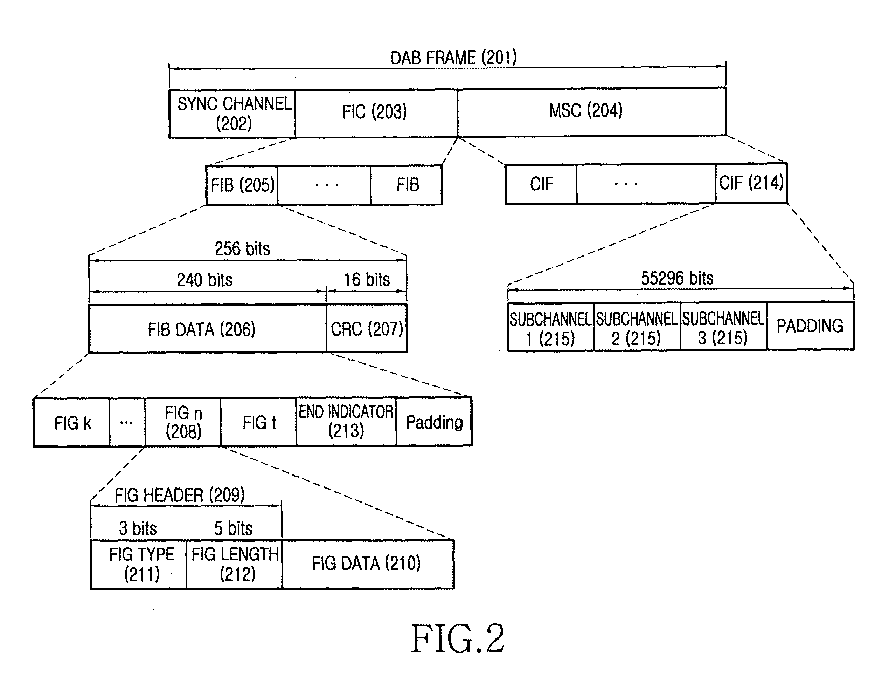

FIG. 2 illustrates a frame structure of the conventional DAB system.

A DAB frame 201 is provided with a synchronization channel 202, an FIC 203, and an MSC 204. The DAB frame 201 is constructed by one null symbol and 76 symbols. The first Orthogonal Frequency Division Multiplexing (OFDM) symbol is the null symbol, and the second OFDM symbol is a Phase Reference Symbol (PRS). Because no signal is transmitted in the first null symbol, the energy during the null symbol interval is significantly less than that of a different symbol transmission interval. Thus, the receiver can detect a frame start point by detecting the null symbol using an energy detection algorithm. The second PRS symbol transmits phase information necessary for data demodulation. A channel of the two symbols is the synchronization channel 202. The synchronization channel 202 is mapped to an interval of the two symbols at the head end of the DAB frame.

An interval of the FIC 203 is subsequent to the synchronization channel 202. Three symbols are used to transmit the FIC 203. The remaining 72 symbols are used to transmit the MSC 204.

The FIC 203 is constructed by a plurality of Fast Information Blocks (FIBs) 205. The number of FIBs 205 transmitted through the one FIC 203 differs according to transmission modes. There are four transmission modes. Transmission Modes I, II, III, and IV are mapped to 12, 3, 4, and 6 FIBs, respectively.

One FIB 205 has a total length of 256 bits. The FIB 205 is constructed by a 240-bit FIB data field 206 and a 16-bit Cyclic Redundancy Check (CRC) field 207. The FIB data field 206 is constructed by a plurality of Fast Information Groups (FIGs) 208. The FIG 208 is divided into an FIG header 209 and an FIG data field 210. The FIG header 209 is constructed by an FIG type field 211 for indicating the type of the data transmitted in the FIG data field 210 and an FIG length field 212 for indicating a length of the FIG data field 210. The FIG 208 is transmitted in the FIB data field 206. When a total length of the FIGs 208 to be transmitted is not equal to that of the FIB data field 206, an end indicator 213 indicates the end of an effective data field and the remaining field is filled with 0's. The end indicator 213 is 8 bits, and all of the 8 bits are 1s.

The MSC 204 is constructed by Common Interleaved Frames (CIFs) 214 in which data to be transmitted is placed. The number of CIFs 214 differs according to transmission modes. Four CIFs are used in Transmission Mode I. One CIF is used in Transmission Modes II and III. Two CIFs are used in Transmission Mode IV The CIF 214 has a length of 55,296 bits, and is constructed by subchannels 215. When the CIF is not filled with the subchannels to be transmitted, the remaining field is filled with 0s.

Referring again to FIG. 1, the MSC is input from the MSC multiplexer 111 to the frame multiplexer 118. Also, the FIC is input to the frame multiplexer 118.

Information to be transmitted in the FIC includes the FIC data service signal 112 for transmitting traffic information or an emergency message, the MCI 113, the SI 114, and so on. The FIC data service signal 112, the MCI 113, and the SI 114 are input to a control information multiplexer 115. The MIC 113 includes control information necessary to map subchannels to the MSC in the multiplexer 111, and information about coding rates of the channel encoders 104 and 109. The channel encoders 104 and 109 and the MSC multiplexer 111 for subchannels of the transmitter are controlled with the MCI 113. The receiver receives the MCI 113 and controls a channel decoder and a demultiplexer for each subchannel.

As shown in FIG. 2, the MCI and the SI are allocated to the data field 210 of the FIG. The FIG header 209 indicates whether data transmitted in the FIG data field 210 is the MCI or the SI. Accordingly, the receiver can determine the type of the data transmitted in the FIG through the FIG header 209. The FIG has a variable length according to an amount of data to be transmitted. Information about the length of each FIG can be detected through the FIG header 209. In addition to the case where the MCI and SI are transmitted, the FIGs to be transmitted in the FIC also transmit a Fast Information Data Channel (FIDC) corresponding to a channel for an FIC data service. Various types of FIGs form one FIC in the control information multiplexer 115.

The FIC passes through an energy dispersal scrambler 116. The energy dispersal scrambler 116 is equal to the energy dispersal scramblers 103 and 108 for data transmission.

An output stream of the energy dispersal scrambler 116 passes through a channel encoder 117. A convolutional code is used in the channel encoder 117. A coding rate of the FIC is fixed to 1/3.

After passing through the channel encoder 117, the FIC forms one DAB frame in the frame multiplexer 118 along with the MSC corresponding to output data of the MSC multiplexer 111 constructed by data of the audio and data services. In the frame structure as described with reference to FIG. 2, the FIC is placed before the MSC. The FIC is different from the MSC in that the FIC does not undergo time interleaving. The receiver can perform FIC demodulation earlier than MSC demodulation.

After the DAB frame passes through the frame multiplexer 118, a DAB signal 123 is generated and transmitted through a broadcasting (DAB) signal generator 124. The DAB signal generator 124 is provided with a data modulator 119, a frequency interleaver 120, a synchronization symbol generator 121, and an OFDM modulator 122. An operation of the DAB signal generator 124 will be described in more detail.

After passing through the frame multiplexer 118, the DAB frame is mapped to two successive bits in the data modulator 119. More specifically, one bit is mapped to I channel data and the other bit is mapped to Q channel data. The two bits construct one symbol in Quadrature Phase Shift Keying (QPSK) modulation, and are reordered through the frequency interleaver 120. The frequency interleaver 120 reorders only Q data of the I/Q data. A rule for reordering the Q data differs according to transmission modes. The rule uses a table set in every transmission mode. The table is defined in European Telecommunications Standards Institute (ETSI) EN 300 401 of the Eureka-147 standard.

After undergoing the frequency interleaving, the data is input to the OFDM modulator 122 and undergoes an Inverse Fast Fourier Transform (IFFT) process. Due to the frequency interleaving effect, subchannel data elements are not successively mapped to the subcarriers, but their positions are dispersively mapped to the subcarriers. For this reason, data to be transmitted may be robust to frequency selective fading. After passing through the frequency interleaver 120, a data symbol is input to the OFDM modulator 122 along with output data of the synchronization symbol generator 121.

The synchronization symbol generator 121 generates a PRS of the synchronization channel 202 of FIG. 2. The PRS provides a phase reference for Differential QPSK (D-QPSK) modulation. The D-QPSK modulation scheme uses a phase difference between a previous symbol and a current symbol, and sends phase information of two adjacent symbols. The receiver computes a phase difference between received symbols and demodulates transmitted symbol values. Signals on which the D-QPSK modulation has been performed are transformed to OFDM symbols by IFFT, and 76 OFDM symbols form one DAB frame signal 123. A frame length of the DAB frame signal 123 differs according to the four possible transmission modes. The frame length has 96 ms in Transmission Mode I, 24 ms in Transmission Modes II and III, and 48 ms in Transmission Mode IV In South Korea, the terrestrial DMB uses Transmission Mode I of the DAB.

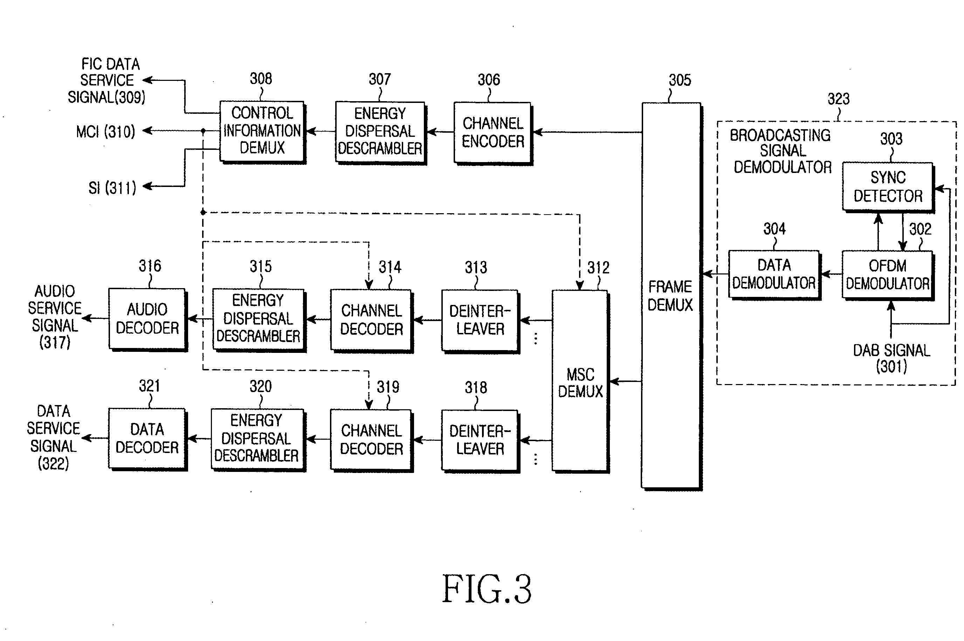

FIG. 3 illustrates a structure of a receiver in the conventional DAB system.

Referring to FIG. 3, a DAB signal demodulator 323 demodulates a DAB signal 301 when the receiver receives the DAB signal 301. The demodulated DAB signal is input to a frame demultiplexer 305. The operation of the DAB signal demodulator 323 is as follows.

A synchronization detector 303 receives the DAB signal 301. The synchronization detector 303 can use the DAB signal 301 or an output signal of an OFDM demodulator 302.

The synchronization detector 303 performs three synchronization detection functions. The first synchronization detection function searches for a start point of the DAB frame. The second synchronization detection function compensates for a frequency offset of a received signal. The third synchronization detection function is symbol timing synchronization detection for compensating for a timing offset between the start points of the symbols in order to search for an exact FFT time. To perform the three synchronization detection functions, a guard interval of a time domain signal is used and an output signal of the OFDM demodulator 302 corresponding to a frequency domain signal is used. Because an algorithm of each synchronization detection process is an issue for implementing the receiver, its detailed description is omitted herein.

The OFDM demodulator 302 performs a Fast Fourier Transform (FFT) process and transforms a time domain signal to a frequency domain DAB signal. Moreover, the OFDM demodulator 302 performs frequency deinterleaving. After undergoing the FFT process and the frequency deinterleaving, data is input to a frame demultiplexer 305 through a data demodulator 304. The frame demultiplexer 305 divides data into an FIC signal carrying control information and an MSC signal carrying data.

The FIC signal separated in the frame demultiplexer 305 passes through a channel decoder 306 and an energy dispersal descrambler 307. A control information demultiplexer 308 divides the signal into a FIC data service signal 309, MCI 310, and SI 311. When the MCI 310 is demodulated, positions and lengths of subchannels in an MSC can be detected, and information about coding rates of the subchannels can be detected.

Information about the subchannels of the MCI 310 is used to control an MSC demultiplexer 312. The MSC demultiplexer 312 separates subchannel data on the basis of the MCI 310. When a subchannel is for the audio service, the subchannel data passes through a deinterleaver 313 and a channel decoder 314. The channel decoder 314 sets a coding rate through the information of the MCI 3 10 and decodes the data. Output data of the channel decoder 314 is decoded in an audio decoder 316 after passing through a descrambler 315, such that an audio signal 317 is output.

In the case of the data service, the MSC demultiplexer 312 determines that a subchannel is for the data service through the information of the MCI 310, and transfers data of an associated subchannel to a deinterleaver 318. After passing through the deinterleaver 318, data is decoded in a channel decoder 319. The coding rate can be detected through the MCI 310. Output data of the channel decoder 319 is decoded in a data decoder 321 after passing through an energy dispersal descrambler 320, such that a data service signal 322 is output.

In the transmission and reception structures of the conventional DAB system operating as described above, data to be transmitted is basically encoded and interleaved in a subchannel unit. There is a problem in that a terminal receives and decodes all of the service data even when all of the service data is not needed during a decoding process, because data is transmitted using one subchannel in at least one service.

### SUMMARY OF THE INVENTION

Accordingly, the present invention has been designed to solve the above and other problems occurring in the prior art. Therefore, it is an object of the present invention to provide a method and apparatus that can priority transmit data belonging to one service using different subchannels such that a coding rate can be differentially applied according to a priority of the data when audio, data, and video services are transmitted using a Digital Audio Broadcasting (DAB) system transmitter in DAB and Digital Multimedia Broadcasting (DMB) systems.

It is another object of the present invention to provide a method and apparatus that can selectively demodulate data according to a request in a receiver by separating transmission subchannels for one service according to data priority.

In accordance with an aspect of the present invention, there is provided a method for supporting a priority transmission of broadcasting data in a transmitter of a digital broadcasting system that includes determining if a priority transmission of one broadcasting service to be provided is supported; setting a plurality of subchannels to be transmitted for the service if the service supports the priority transmission and setting priority of data to be mapped to the plurality of subchannels; mapping the data of the broadcasting service to the plurality of subchannels according to the priority after the priority is set; and encoding data streams mapped to the plurality of subchannels in different encoders and transmitting the encoded data streams.

In accordance with another aspect of the present invention, there is provided an apparatus for supporting a priority transmission of broadcasting data in a transmitter of a digital broadcasting system that includes a data generator for setting a plurality of subchannels for transmitting data of one broadcasting service to be provided, setting a priority of data to be mapped to the plurality of subchannels, and mapping the data of the broadcasting service to the plurality of subchannels according to the priority; and a plurality of subchannel transmitters, mapped to the plurality of subchannels, for encoding data streams mapped to the plurality of subchannels in different encoders and transmitting the encoded data streams.

In accordance with another aspect of the present invention, there is provided a method for receiving priority transmitted data in a receiver of a digital broadcasting system that includes demodulating received data; obtaining main service data and control information for decoding the main service data from the modulated data; demultiplexing the main service data into subchannel data streams corresponding to subchannels mapped to the data with different priority values for one broadcasting service; decoding the subchannel data streams according to the control information; and combining the subchannel data streams decoded on a subchannel-by-subchannel basis and recovering one service signal.

In accordance with yet another aspect of the present invention, there is provided an apparatus for receiving priority transmitted data in a receiver of a digital broadcasting system that includes a demodulator for demodulating received data; a frame demultiplexer for dividing the demodulated data into main service data and control information for decoding the main service data; a main service channel demultiplexer for demultiplexing the main service data into subchannel data streams corresponding to subchannels mapped to the data with different priority values for one broadcasting service; a decoder for decoding the subchannel data streams according to the control information; and a data recovery unit for combining the subchannel data streams decoded on a subchannel-by-subchannel basis and recovering a service signal.

### BRIEF DESCRIPTION OF THE DRAWINGS

The above and other objects and aspects of the present invention will be more clearly understood from the following detailed description taken in conjunction with the accompanying drawings, in which:
FIG. 1 illustrates a structure of a transmitter in a conventional Digital Audio Broadcasting (DAB) system;
FIG. 2 illustrates a structure of a frame in the conventional DAB system;
FIG. 3 illustrates a structure of a receiver in the conventional DAB system;
FIG. 4 illustrates a structure of a transmitter for supporting a priority transmission function according to priority of data in accordance with the present invention;
FIG. 5 illustrates a video encoder for supporting scalability in accordance with the present invention;
FIG. 6 is a flowchart illustrating an operation process of the transmitter for supporting a priority transmission function according to priority of data in accordance with the present invention;
FIG. 7 illustrates a structure of a receiver for supporting a priority transmission function according to priority of data in accordance with the present invention; and
FIG. 8 is a flowchart illustrating an operation process of the receiver for supporting a priority transmission function according to priority of data in accordance with the present invention.

### DETAILED DESCRIPTION OF THE PREFERRED EMBODIMENTS

The operation principles of exemplary embodiments of the present invention will be described in detail herein below with reference to the accompanying drawings. In the following description, detailed descriptions of functions and configurations incorporated herein that are well known to those skilled in the art are omitted for clarity and conciseness. It is to be understood that the phraseology and terminology employed herein are for the purpose of description and should not be regarded as limiting the present invention.

The present invention provides a method for priority transmitting data of an identical service using different subchannels according to a priority in a transmitter of a Digital Audio Broadcasting (DAB) system. An exemplary embodiment of a video service signal will be described.

The priority transmission according to the priority of data provided in the present invention is not limited to the video service signal, but can be applied to audio and data services according to service characteristics.

Herein, a transmitter is used for a terrestrial Digital Multimedia Broadcasting (DMB) system. As described above, the transmitter of the terrestrial DMB system is the same as that of the DAB system, except that the transmitter of the DMB system is a device that can transmit a video service. An application of the transmitter is not limited to the terrestrial DMB system.

The priority transmission method according to the priority of data transmits one or more subchannels for one service. In an exemplary embodiment, two subchannels are used for one service. Of course, the number of subchannels to be used may be at least two according to the number of subchannels available in a system, a priority distribution of data to be transmitted, or an amount of data to be transmitted.

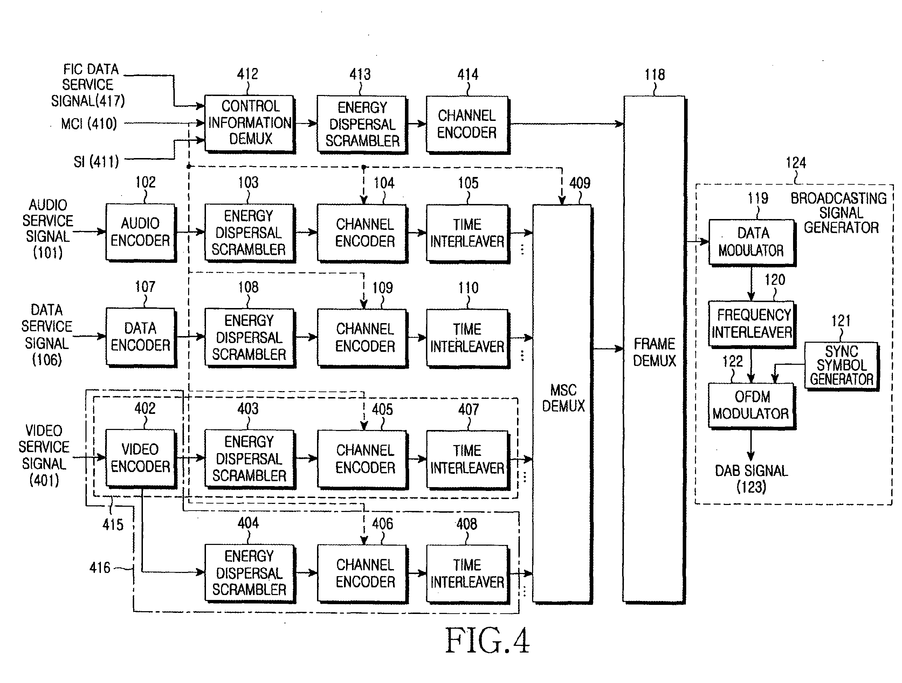

FIG. 4 illustrates a structure of a transmitter for supporting a priority transmission function according to priority of data in accordance with the present invention.

Referring to FIG. 4, the transmitter basically uses a transmitter structure of the conventional DAB system as described with reference to FIG. 1. In FIG. 4, an audio service signal 101 and a data service signal 106 are input to a Main Service Channel (MSC) multiplexer 409 after passing through energy dispersal scramblers 103 and 108, channel encoders 104 and 109, time interleavers 105 and 110 as in the transmitter of the conventional DAB system. The transmission of the audio service signal 101 and the data service signal 106 can be referred to in the description of FIG. 1.

That is, the components for performing the same operation in FIGS. 1 and 4 are denoted by the same reference numerals, and their detailed description is the same as described with reference to FIG. 1.

In addition to the audio service signal 101 and the data service signal 106, a video service signal 401 is input for another service. The video service signal 401 is output to a video encoder 402. Like the audio encoder 102, the video encoder 402 removes unnecessary information from the input data, compensates the data, and reduces the data to be transmitted, thereby enabling more efficient data transmission. The video encoder 402 is referred to as a data generator for encoding a video service signal and generating data of a plurality of layers.

The video encoder 402 can use a Moving Picture Experts Group (MPEG)-4 Part-10 Advanced Video Coding (AVC) standard. The video encoder 402 uses the scalability technology for dividing data into two layers and transmitting the data of the two layers such that the data can be effectively decoded. In the two-layer data, one-layer data is a base layer bit stream corresponding to basic data essential for video decoding and the other layer data is an enhancement layer bit stream corresponding to additional data.

According to an encoding method, three scalability techniques are used. The first technique is Signal-to-Noise Ratio (SNR) scalability in which base layer data has a quantization interval different from that of enhancement layer data. The second technique is temporal scalability in which the base layer data has a frame transmission rate different from that of the enhancement layer data. The third technique is spatial scalability in which the base layer data has a spatial resolution different from that of the enhancement layer data.

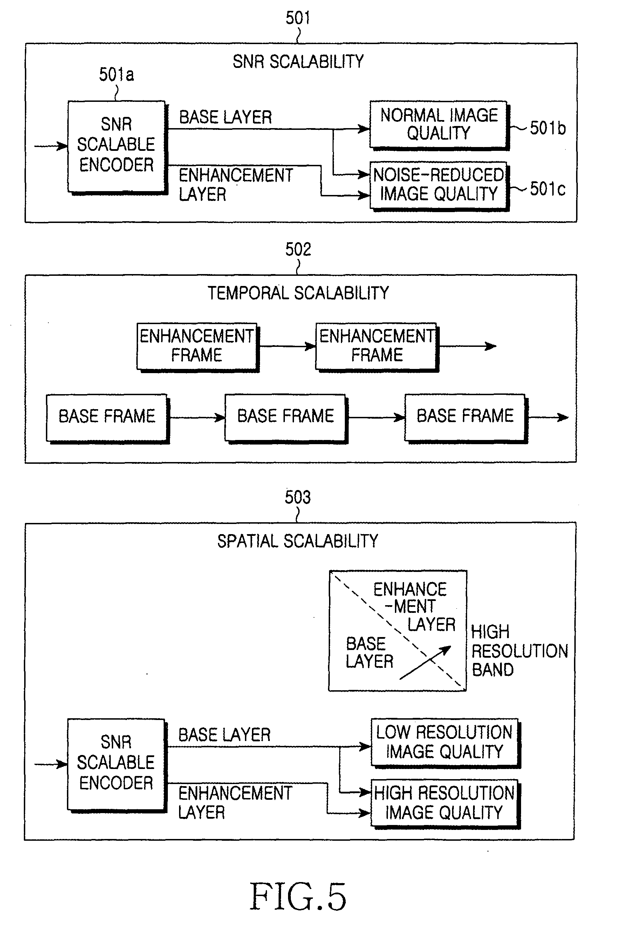

FIG. 5 illustrates a video encoder for supporting scalability in accordance with the present invention.

Reference numeral 501 denotes the case where the SNR scalability is used. An SNR scalable encoder 501a sends noise-reduced data as enhancement layer data 501c in a process for performing quantization by narrowing a quantization interval more than that of base layer data 501b. When decoding the base layer, a decoder can output a video image of general normal image quality. When the enhancement layer is additionally decoded, a better video output in which noise has been reduced can be viewed because noise occurred in a process for decoding only the base layer can be removed.

Reference numeral 502 denotes the case where the temporal scalability is used. In the case of the temporal scalability, a lower layer frame is transmitted in the base layer, and a higher layer frame is transmitted in the enhancement layer rather than the base layer. For example, when there is data of 30 frames per second, 15 main frames are transmitted in the base layer, and the remaining 15 frames are transmitted in the enhancement layer. Although the decoder decodes only the frames transmitted in the base layer, a video output can be viewed. When enhancement layer data is decoded, motion video can be output more smoothly.

Reference numeral 503 denotes the case where the spatial scalability is used. A spatial scalable encoder transmits low-resolution data in the base layer, and transmits high-resolution data in the enhancement layer. For example, an image of Standard Definition Television (SDTV) class image quality can be viewed when the decoder decodes only the base layer data, and an image of High Definition Television (HDTV) class image quality can be viewed when the decoder decodes up to the enhancement layer data.

Common characteristics of the three scalability-based encoding methods are that data is divided into the two layers, the base layer is essentially decoded, and the enhancement layer is optionally decoded. Accordingly, an output of the video encoder is divided into the two layers, i.e., data streams with different priority values, regardless of a used scalability-based encoding method. Because the essential data is to be transmitted, received, and decoded, it is referred to as data with high priority. The optional data is referred to as data with low priority.

Referring again to FIG. 4, data streams with different priority values are transmitted through different subchannels.

A data stream with a high priority is input to an energy dispersal scrambler 403 and passes through a channel encoder 405. A data stream with a low priority is input to an energy dispersal scrambler 404 and passes through a channel encoder 406. As described with reference to FIG. 1, the channel encoders 405 and 406 select a coding rate from among selectable coding rates. Although data is for the same service, the transmitter separates data according to a priority, thereby selecting different coding rates on a subchannel-by-subchannel basis.

Data streams of the video encoder 402 are encoded in the same channel encoder as in the conventional system. However, the present invention has a structure in which two data streams with different priority values independently pass through the channel encoders 405 and 406. That is, data with a high priority is transmitted in a subchannel through a subchannel transmitter as indicated by reference numeral 415, whereas data with a low priority is transmitted in a subchannel through a subchannel transmitter as indicated by reference numeral 416. A process performed for each independent subchannel is as follows.

The channel encoder 405 encodes the data with the high priority. The channel encoder 405 uses a convolutional code. A coding rate of the channel encoder 405 is to be determined by characteristics of the data to be transmitted from the transmitter as in FIG. 1. Because the data to be processed in the channel encoder 405 has a high priority, a selection of a relatively high coding rate increases Quality of Service (QoS). Information about the coding rate of the channel encoder 405 is included in Multiplex Configuration Information (MCI) 410 indicating subchannel information and is transmitted to a receiver. Output data of the channel encoder 405 is input to the MSC multiplexer 409 through a time interleaver 407.

The channel encoder 406 encodes the data with the low priority. The channel encoder 406 uses a convolutional code. A coding rate of the channel encoder 406 is to be set to a proper value according to characteristics of the data to be transmitted from the transmitter. Because the data to be processed in the channel encoder 406 has a low priority, a relatively low coding rate is selected, such that efficient data transmission is performed. That is, the relatively high coding rate is applied to the data with the high priority and the relatively low coding rate is applied to the data with the low priority, such that QoS is improved even when the same data for one service is transmitted. Information about the coding rate of the channel encoder 406 is included in the MCI 410 indicating subchannel information and is transmitted to the receiver. Output data of the channel encoder 406 is input to the MSC multiplexer 409 through a time interleaver 408.

As a result, one video service signal 401 is encoded in one video encoder 402. Data is separated according to a priority and the separated data is input to the MSC multiplexer 409 through the different subchannels 415 and 416.

The MSC multiplexer 409 receives existing audio and data service subchannels or audio and data service subchannels using a priority transmission function according to a data priority as well as a video service subchannel for supporting a priority transmission function according to a data priority. To multiplex the subchannels, the MSC multiplexer 409 is controlled according to the MCI 410.

Information to be transmitted in a Fast Information Channel (FIC) includes a FIC data service signal 417 for transmitting urgent data such as traffic information or emergency information, the MCI 410 corresponding to control information about a multiplex of subchannels, and Service Information (SI) 411 containing control information about services allocated to subchannels. In this case, control information for a priority transmission according to the data priority can be inserted into the MCI 410 or the SI 411 to be transmitted. If the control information for the priority transmission according to the data priority is transmitted through the MCI 410, the MCI 410 is to include information about priority of the data to be transmitted through subchannels and information about identifiers (IDs) and coding rates of the subchannels. The conventional MCI 410 only indicates the number of service components for one service and a mapping relation between service components and subchannels. Moreover, the conventional MCI 410 additionally includes information about the priority of each subchannel when there is present a service for performing a priority transmission function according to data priority.

Along with subchannel information, the priority information configures a Fast Information Group (FIG) data field in a control information multiplexer 412. FIGs undergo a convolutional encoding process in a channel encoder 414 through an energy dispersal scrambler 413. The convolutionally encoded FIGs are input to a frame multiplexer 118, and are transmitted in an FIC.

After a DAB frame passes through the frame multiplexer 118, a DAB signal 123 is generated and transmitted through a DAB signal generator 124. The DAB signal generator 124 is provided with a data modulator 119, a frequency interleaver 120, a synchronization symbol generator 121, and an Orthogonal Frequency Division Multiplexing (OFDM) modulator 122. An operation of the DAB signal generator 124 will be described in more detail.

After passing through the frame multiplexer 118, the DAB frame is mapped to two successive bits in the data modulator 119. More specifically, one bit is mapped to I channel data and the other bit is mapped to Q channel data. The two bits construct one symbol in Quadrature Phase Shift Keying (QPSK) modulation, and are reordered through the frequency interleaver 120. The frequency interleaver 120 reorders only Q data of the I/Q data. A rule for reordering the Q data differs according to transmission modes. The rule uses a table set in every transmission mode. The table are defined in European Telecommunications Standards Institute (ETSI) EN 300 401 of the European Research Coordination Agency (Eureka) 147 standard.

After undergoing the frequency interleaving, the data is input to the OFDM modulator 122 and undergoes an Inverse Fast Fourier Transform (IFFT) process. Due to the frequency interleaving effect, subchannel data elements are not successively mapped to subcarriers, but their positions are dispersively mapped to subcarriers. For this reason, data to be transmitted may be robust to frequency selective fading. After passing through the frequency interleaver 120, a data symbol is input to the OFDM modulator 122 along with output data of the synchronization symbol generator 121. The synchronization symbol generator 121 generates a Phase Reference Symbol (PRS) of the synchronization channel 202 of FIG. 2. The PRS provides a phase reference for Differential QPSK (D-QPSK) modulation. The D-QPSK modulation scheme uses a phase difference between a previous symbol and a current symbol, and sends phase information of two adjacent symbols. The receiver computes a phase difference between received symbols and demodulates transmitted symbol values. Signals on which the D-QPSK modulation has been performed are transformed to OFDM symbols by IFFT, and 76 OFDM symbols form one DAB frame signal 123. A frame length of the DAB frame signal 123 differs according to the four transmission modes. The frame length has 96 ms in Transmission Mode I, 24 ms in Transmission Modes II and III, and 48 ms in Transmission Mode IV In South Korea, the terrestrial DMB uses Transmission Mode I of the DAB.

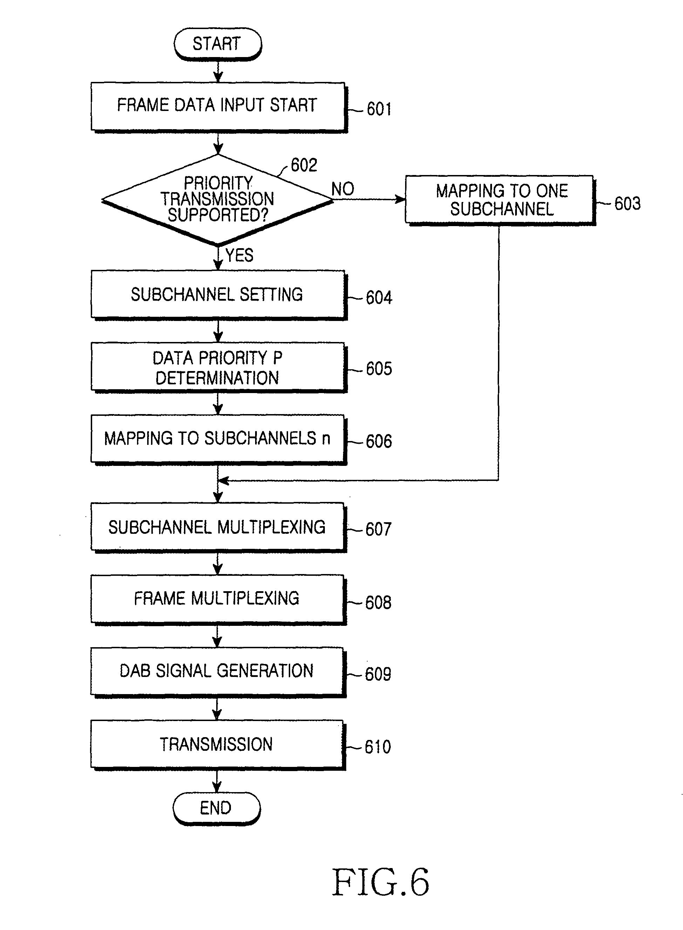

FIG. 6 is a flowchart illustrating an operation process of the transmitter for supporting a priority transmission function according to priority of data in accordance with the present invention.

The following operation can be performed in a video encoder. When data of a frame to be transmitted is input in step 601, the transmitter determines whether a current service supports a priority transmission in step 602. If the current service does not support the priority transmission, the process proceeds to step 603 to perform a mapping operation for one subchannel and then proceeds to step 607. However, if the current service supports the priority transmission, the process proceeds to step 604 in which the transmitter sets the number of subchannels, *N*, and sets priority parameters *Pn* of subchannels.

In an exemplary embodiment, a video service using two subchannels will be described. Therefore, *N* = 2 and the priority parameters *P1* and *P2* of the subchannels are set. At this time, the priority parameter *Pn* is of an integer value equal to or greater than 1. If the value is small, it means that the priority is high. Subchannel 1 is set as the subchannel for data with a high priority and *P1* = 1. Subchannel 2 is set as the subchannel for data with a low priority and *P2* = 2.

After the priority parameters of the subchannels are set, priority *P* for output data of the encoder is determined in step 605. The *P* value is selected from the priority parameters of the subchannels. For example, in step 605, *P* = 1 at a current time because the output data has a high priority when it is base layer data, and *P* = 2 at the current time because the output data has a low priority when it is enhancement layer data. In step 606, Subchannel 1 with the priority parameter *P1* is mapped to the base layer data, and Subchannel 2 with the priority parameter *P2* is mapped to the enhancement layer data, and a signal is differentially processed according to the data priority. In step 607, the subchannels are multiplexed and then an MSC is generated. In step 608, the MSC and an input FIC are multiplexed. In step 609, a synchronization symbol is inserted into a signal obtained by multiplexing the MSC and the FIC and then a broadcasting signal is generated. In step 610, the broadcasting signal is transmitted to a receiver. In the exemplary embodiment of the present invention, the broadcasting signal is a DAB signal based on OFDM modulation.

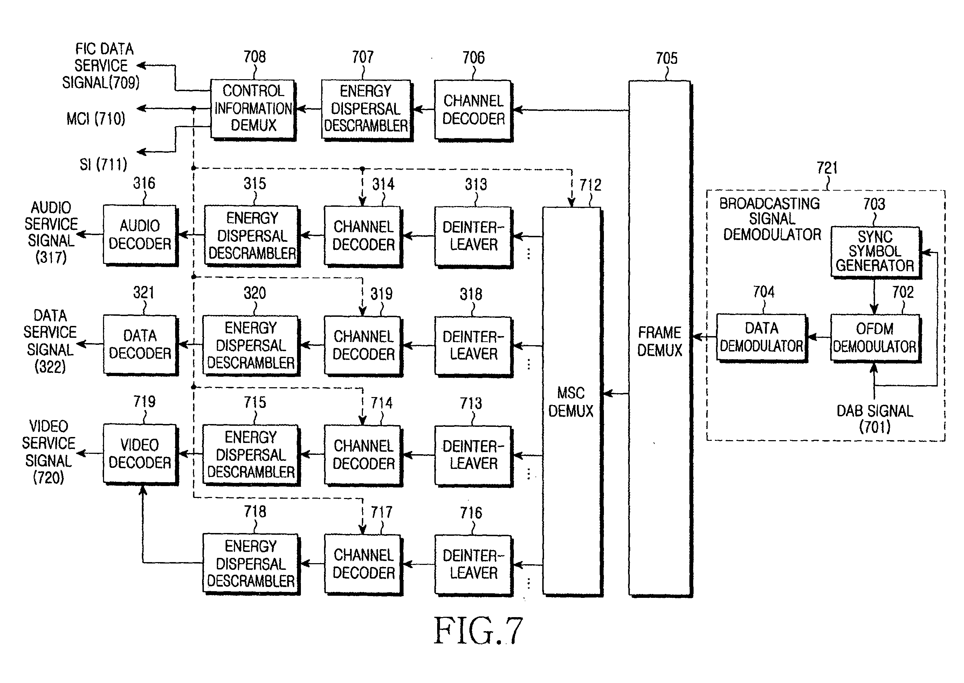

FIG. 7 illustrates a structure of a receiver for supporting a differential transmission function according to priority of data in accordance with the present invention.

The components for performing the same operation in FIGS. 3 and 7 are denoted by the same reference numerals, and their detailed description is the same as described with reference to FIG. 3.

When a priority transmission function is supported according to a data priority as illustrated in FIG. 6, the receiver does not need an additional module or device. Thus, the basic operation of the receiver is the same as that of the structure of FIG. 3. When a DAB signal 701 is input to the receiver, it is demodulated in a DAB signal demodulator 721. The demodulated DAB signal is input to a frame demultiplexer 705. The specific operation of the DAB signal demodulator 721 is as follows.

When the DAB signal 701 is input, it is divided into FIC data and MSC data in the frame demultiplexer 705 after passing through an OFDM demodulator 702, a synchronization detector 703, and a data demodulator 704. The FIC data is decoded in a channel decoder 706. After passing through an energy dispersal descrambler 707, the FIC data is divided into MCI 710 and SI 711 in a control information demultiplexer 708. Then, the receiver can determine whether a priority transmission is supported according to the priority of the data of a particular service, and can determine which of the subchannels has the highest priority.

Subchannel information is used to control an MSC demultiplexer 712. The MSC demultiplexer 712 separates the received MSC data on a subchannel-by-subchannel basis. The MSC demultiplexer 712 divides service-by-service signals using the subchannel information. The service-by-service signals are input to a deinterleaver for subchannel demodulation.

When there is present a video service supporting the priority transmission proposed in the present invention, the MSC demultiplexer 712 detects priority information of each subchannel from the MCI 710 or the SI 711. A subchannel with a high priority is input to a video decoder 719 through a subchannel receiver including a deinterleaver 713, a channel decoder 714, and an energy dispersal descrambler 715, and a video signal 720 is output. When there is present a subchannel with a low priority, a stage subsequent to the deinterleaver 716, i.e., a subchannel receiver including a deinterleaver 716, a channel decoder 717, and an energy dispersal descrambler 718, does not operate if the subchannel with the low priority does not need to be demodulated in the receiver.

In contrast, when the receiver desires to demodulate the subchannel with the low priority, the stage subsequent to the deinterleaver 716 operates as that for the subchannel with the high priority. When a plurality of subchannels with low priority are demodulated, the video decoder 719 (called the data recovery unit) combines the plurality of subchannels and reproduces a video signal. That is, when a transmitting side sends data of one service using a plurality of subchannels, the receiver sets the number of subchannels to be decoded among the plurality of subchannels in a descending order of priority, decodes and combines the subchannels, and outputs a video service signal 720.

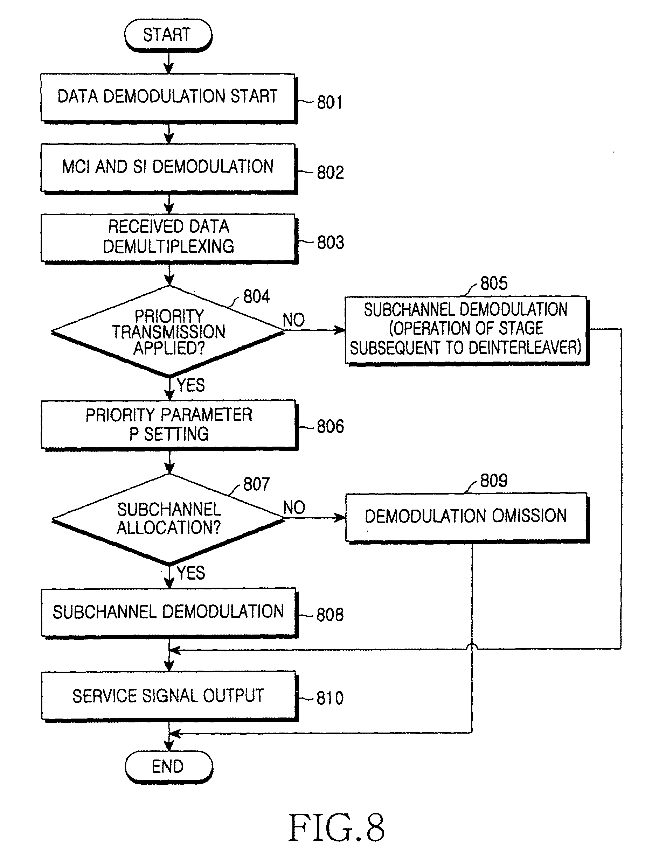

FIG. 8 is a flowchart illustrating an operation process of the receiver for supporting a priority transmission function according to priority of data in accordance with the present invention.

In step 801, the receiver receives a DAB signal and starts to demodulate data. In step 802, a data demodulation process is performed, thereby obtaining MCI and SI corresponding to control information. In step 803, data included in the DAB signal is demultiplexed on a subchannel-by-subchannel basis. In step 804, a determination is made as to whether the received subchannels have been applied to the priority transmission. If the received subchannels have not been applied to the priority transmission, subchannel demodulation is immediately started in step 805. However, if the received subchannels have been applied to the priority transmission, the receiver sets an priority parameter *P* corresponding to a criterion for demodulating data of an associated service according to its capability in step 806. In this embodiment, a video service using two subchannels will be described.

The receiver sets *P* (= 1) when desiring to decode only one of the two subchannels of the video service. When desiring to demodulate one or more subchannels, the receiver sets *P* to a priority value of a subchannel with the lowest priority value among the one or more subchannels. That is, if the receiver desires to demodulate three subchannels with high priority values when four subchannels are present, *P* is set to 3.

Subsequently, subchannels are allocated on an priority-by-priority basis in step 807. If four subchannels are present for data of one service and three subchannels with a high priority are demodulated, the data is allocated to the subchannels in which *P* = 1, 2, and 3. The process proceeds to step 808 to perform demodulation on a subchannel-by-subchannel basis. Because no subchannel is allocated to data with a lowest priority in step 807, subchannel demodulation is not performed in step 809. That is, an operation subsequent to a deinterleaver is not performed. When four subchannels for data of one service are present but one data stream with the highest priority is to be demodulated in another example, a subchannel is allocated to only one data stream with the highest priority in step 807 and subchannel demodulation is performed in step 808.

Because no subchannel is allocated to the remaining three data streams with low priority in step 807, subchannel demodulation is not performed in step 809. At this time, the subchannel allocation can be performed on the basis of control information obtained from the MCI or SI. That is, when information indicating that a priority parameter *P1* of Subchannel 1 is 1 and a priority parameter *P2* of Subchannel 2 is 2 is transmitted through MCI or SI from the transmitter as assumed in FIG. 6, the receiver obtains the MCI and SI and has priority parameter information of the subchannels in step 802. Accordingly, data priority is reflected and subchannels can be allocated in step 807.

The subchannel allocation can be determined by taking into consideration the control information obtained through the MCI or SI and the capability of the receiver. That is, when the receiver can support a high image quality in a state in which four subchannels for data of one service are present, it can allocate subchannels to three data streams with the high priority. However, if the receiver does not support a high image quality, it allocates a subchannel to only one data stream with the highest priority. At this time, the service priority parameter *P* is not changed before an operation for one frame is not ended. The priority parameter can be changed when the next frame starts. A criterion for changing a service priority parameter can be arbitrarily selected in the receiver, but is not limited.

Subsequently, the data demodulated on the subchannel-by-subchannel basis in step 808 is combined and output as a service signal in step 810.

A conventional receiver incapable of determining whether data is priority transmitted according to a priority, i.e., a conventional DAB receiver, can read IDs of a plurality of subchannels for transmitting one service through service configuration information. Because the conventional receiver obtains information about all transmitted subchannels and decodes all the subchannels, it has a problem in the operation of the conventional receiver.

Because data is conventionally transmitted through one channel even when it is differentially encoded according to a priority, a priority order of each data stream can be detected after a process of a channel decoder. However, because the data is transmitted through different subchannels according to the priority in the present invention, the receiver can detect the priority of received data as soon as the received data is divided on a subchannel-by-subchannel basis after passing through an OFDM demodulator. Thus, the conventional system can detect a priority order of data after a channel decoding process in a channel decoder even when the data with a low priority does not need to be demodulated. However, the receiver of the present invention can determine whether data of each subchannel is to be demodulated in a stage subsequent to the OFDM demodulator. In the present invention, a subchannel is not demodulated when data does not need to be demodulated, such that the receiver can reduce the demodulation process. The present invention proposes the technology to be applied to a transmitter of a DAB system. Because a terrestrial DMB system uses the transmitter of the DAB system, the present invention can also be applied to the terrestrial DMB system as well as to the DAB system.

The present invention differentially applies a coding rate by separating data belonging to one service according to a priority and employing different subchannels, thereby improving data transmission efficiency. The receiver selectively demodulates data according to a request therein, thereby reducing the demodulation time and hardware complexity.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

## Claims

1. A method for supporting a priority transmission of broadcasting data in a transmitter of a digital broadcasting system, comprising the steps of:
determining whether a priority transmission of at least one broadcasting service to be provided is supported;
setting a plurality of subchannels to be transmitted for the at least one broadcasting service if the at least one broadcasting service supports the priority transmission and setting priority of data to be mapped to the plurality of subchannels;
mapping the data of the at least one broadcasting service to the plurality of subchannels according to the priority and after the priority is set; and
encoding in different encoders data streams mapped to the plurality of subchannels, and transmitting the encoded data streams.

2. The method of claim 1, further comprising:
setting a basic data stream to be transmitted for decoding as data with high priority among the data;
setting the remaining additional data streams as data with low priority; and
dividing the data with the high priority and the data with the low priority.

3. The method of claim 1, wherein the data comprises a plurality of layer data streams generated by performing a video encoding process for a video service signal in the broadcasting service.

4. The method of claim 3, wherein the plurality of layer data streams are at least two layer data streams with different quantization intervals.

5. The method of claim 3, wherein the plurality of layer data streams are at least two layer data streams with different frame transmission rates.

6. The method of claim 3, wherein the plurality of layer data streams are at least two layer data streams with different spatial resolutions.

7. The method of claim 1, wherein the encoding step comprises:
scrambling data mapped to each subchannel;
encoding the scrambled data at a coding rate of an associated subchannel; and
performing a time interleaving process for the encoded data.

8. The method of claim 7, wherein the transmitting step comprises:
multiplexing data interleaved on the plurality of subchannels into main service channel data;
multiplexing the main service channel data and Fast Information Channel (FIC) data comprising control information for the plurality of subchannels;
modulating the multiplexed data;
interleaving the modulated data;
performing a fast Fourier transform process for the interleaved data; and
generating a broadcasting signal.

9. The method of claim 8, wherein the control information comprises a data priority parameter of each subchannel.

10. An apparatus for supporting a priority transmission of broadcasting data in a transmitter of a digital broadcasting system, comprising:
a data generator for setting a plurality of subchannels for transmitting data of at least one broadcasting service to be provided, setting a priority of data to be mapped to the plurality of subchannels, and mapping the data of the at least one broadcasting service to the plurality of subchannels according to the priority; and
a plurality of subchannel transmitters, mapped to the plurality of subchannels, for encoding in different encoders data streams mapped to the plurality of subchannels, and transmitting the encoded data streams.

11. The apparatus of claim 10, wherein the data generator sets a basic data stream to be transmitted for decoding as data with a high priority among the data, and sets the remaining additional data streams as data with a low priority.

12. The apparatus of claim 10, wherein the data generator is a video encoder for performing a video encoding process for a video service signal in the broadcasting service, generating a plurality of layer data streams, mapping the plurality of layer data streams to the plurality of subchannels, and outputting a mapping result.

13. The apparatus of claim 12, wherein the data generator generates data streams with different quantization intervals.

14. The apparatus of claim 12, wherein the data generator generates data streams with different frame transmission rates.

15. The apparatus of claim 12, wherein the data generator generates data streams with different spatial resolutions.

16. The apparatus of claim 10, wherein each of the plurality of subchannel transmitters comprises:
an energy dispersal scrambler for scrambling data mapped to each subchannel;
a channel encoder for encoding the scrambled data at a coding rate of an associated subchannel; and
a time interleaver for performing a time interleaving process for the encoded data.

17. The apparatus of claim 16, further comprising:
a main service channel multiplexer for multiplexing the data time-interleaved on the plurality of subchannels into main service channel data;
a frame multiplexer for multiplexing the main service channel data and Fast Information Channel (FIC) data comprising control information for the plurality of subchannels;
a data modulator for modulating the multiplexed data;
a frequency interleaver for interleaving the modulated data; and
an Orthogonal Frequency Division Multiplexing (OFDM) demodulator for performing a fast Fourier transform process on the interleaved data and generating a Digital Audio Broadcasting (DAB) signal.

18. The apparatus of claim 17, wherein the control information comprises a data priority parameter of each subchannel.

19. A method for receiving priority transmitted data in a receiver of a digital broadcasting system, comprising the steps of:
demodulating received data;
obtaining main service data and control information for decoding the main service data from the modulated data;
demultiplexing the main service data into subchannel data streams corresponding to subchannels mapped to the data with different priority values for one broadcasting service;
decoding the subchannel data streams according to the control information; and
combining the subchannel data streams decoded on a subchannel-by-subchannel basis and recovering one service signal.

20. The method of claim 19, wherein the subchannels are divided into at least one subchannel with a high priority carrying basic data to be decoded to generate the service signal and at least one subchannel with a low priority carrying secondary data.

21. The method of claim 19, wherein the decoding step comprises:
setting the number of subchannels to be decoded according to a capability of the receiver; and
decoding data based on the set number of subchannels in a descending order of priority.

22. The method of claim 19, wherein the data streams are obtained by decoding data divided into at least two layers with different quantization intervals.

23. The method of claim 19, wherein the data streams are obtained by decoding data divided into at least two layers with different frame transmission rates.

24. The method of claim 19, wherein the data streams are obtained by decoding data divided into at least two layers with different spatial resolutions.

25. The method of claim 19, wherein the recovering step comprises:
performing a video decoding process for at least one layer data included in at least one subchannel data stream; and
generating a video service signal for the broadcasting service.

26. The method of claim 19, wherein the decoding step comprises:
deinterleaving the data demultiplexed on the subchannel-by-subchannel basis;
decoding the deinterleaved data; and
descrambling the decoded data.

27. An apparatus for receiving priority transmitted data in a receiver of a digital broadcasting system, comprising:
a demodulator for demodulating received data;
a frame demultiplexer for dividing the demodulated data into main service data and control information for decoding the main service data;
a main service channel demultiplexer for demultiplexing the main service data into subchannel data streams corresponding to subchannels mapped to the data with different priority values for one broadcasting service;
a decoder for decoding the subchannel data streams according to the control information; and
a data recovery unit for combining the subchannel data streams decoded on a subchannel-by-subchannel basis and recovering a service signal.

28. The apparatus of claim 27, wherein the subchannels are divided into at least one subchannel with a high priority carrying basic data to be decoded to generate the service signal and at least one subchannel with a low priority carrying secondary data.

29. The apparatus of claim 27, wherein the data recovery unit sets the number of subchannels to be decoded according to a capability of the receiver, and decodes data based on the set number of subchannels in a descending order of priority.

30. The apparatus of claim 27, wherein the data recovery unit decodes data divided into at least two layers with different quantization intervals.

31. The apparatus of claim 27, wherein the data recovery unit decodes data divided into at least two layers with different frame transmission rates.

32. The apparatus of claim 27, wherein the data recovery unit decodes data divided into at least two layers with different spatial resolutions.

33. The apparatus of claim 27, wherein the data recovery unit is a video decoder for performing a video decoding process for at least one layer data included in at least one subchannel data stream, and generating a video service signal for the broadcasting service.

34. The apparatus of claim 27, further comprising:
a subchannel receiver, the subchannel receiver comprising:
a deinterleaver for deinterleaving the data demultiplexed on the subchannel-by-subchannel basis;
a channel decoder for decoding the deinterleaved data; and
an energy dispersal descrambler for descrambling the decoded data.
